# EUROPÄISCHE PATENTSCHRIFT

(11) **EP 1 989 419 B1**
(45) Veröffentlichungstag und Bekanntmachung des Hinweises auf die Patenterteilung: **02.11.2011**
(21) Anmeldenummer: 07722921.9
(22) Anmeldetag: 24.02.2007
(51) Int. Cl.: F02B 37/12, F02B 39/00, F02D 41/00

(54) **ABGASTURBOLADER FÜR EINE BRENNKRAFTMASCHINE**
EXHAUST GAS TURBOCHARGER FOR AN INTERNAL COMBUSTION ENGINE
TURBOSOUFFLANTE A GAZ D'ECHAPPEMENT POUR UN MOTEUR A COMBUSTION INTERNE

(30) Priorität: 01.03.2006 DE 102006009295
(43) Veröffentlichungstag der Anmeldung: 12.11.2008
(73) Patentinhaber: Daimler AG, 70327 Stuttgart (DE)
(72) Erfinder: WEYMANN, Hardy, 78727 Oberndorf (DE)
(74) Vertreter: JENSEN & SON
(86) Internationale Anmeldenummer: PCT/EP2007/001609
(87) Internationale Veröffentlichungsnummer: WO 2007/101566

(56) Entgegenhaltungen:
- DE-A1- 3 923 753
- DE-A1- 10 054 843
- DE-A1- 10 237 416
- US-A1- 2002 170 291

## Beschreibung

Die Erfindung betrifft einen Abgasturbolader für eine Brennkraftmaschine, insbesondere für eine Brennkraftmaschine eines Nutzfahrzeugs, nach dem Oberbegriff des Anspruchs 1 sowie ein Verfahren zum Bestimmen einer von einer Brennkraftmaschine angesaugten Luftmasse.

Die von einer Brennkraftmaschine angesaugte Luftmasse wird zum Beispiel zur Abgasrückführregelung als motorische Messgröße bei Personenkraftwagen und Nutzfahrzeugen benötigt. Bei Pkw-Motoren werden zum Erfassen der angesaugten Luftmasse serienmäßig Heißfilm-Luftmassenmesser (HFM) eingesetzt. Aus Gründen der Dauerhaltbarkeit, der Sensordrift und der Schnittstellendefinition zum Fahrzeug hin besteht bei Nutzfahrzeugmotoren im Allgemeinen keine Möglichkeit, einen solchen HFM-Sensor zu integrieren. Außerdem sind derartige HFM-Sensoren üblicherweise pulsationsempfindlich und extrem verschmutzungsanfällig.

Es besteht daher Bedarf an einer Vorrichtung bzw. Maßnahme zum Erfassen einer von einer Brennkraftmaschine angesaugten Luftmasse, die in vorteilhafter Weise auch bei Nutzfahrzeugen einsetzbar ist.

In diesem Zusammenhang ist aus der DE 15 76 278 A zum Beispiel eine Kraftstoffeinspritzanlage für Ottomotoren bekannt, die in einem Luftansaugkanal eine beliebig einstellbare Drosselklappe aufweist. Stromauf der Drosselklappe sind eine Staudruckmessvorrichtung und ein weiteres Drosselglied vorgesehen. Die Staudruckmessvorrichtung umfasst eine Staudrucksonde zum Erfassen des Totaldrucks im Luftansaugkanal sowie eine Messbohrung in der Kanalwandung zum Erfassen des statischen Drucks im Luftansaugkanal, wobei das weitere Drosselglied zwischen der Staudrucksonde und der Messbohrung im Luftansaugkanal positioniert ist. In Abhängigkeit von dem aus dem Totaldruck und dem statischen Druck im Luftansaugkanal bestimmten Differenzdruck wird dann die KraftstoffZumessung des Motors geregelt.

Weiter offenbart der Patent Abstracts of Japan der JP 63-090621 A einen Abgasturbolader für eine Brennkraftmaschine, vor dessen Verdichter ein Luftmassensensor angeordnet ist. Über die Art und die Funktionsweise des verwendeten Luftmassensensors finden sich in der Zusammenfassung keine näheren Angaben.

In der DE 14 28 043 A ist ein Turboverdichter für eine Brennkraftmaschine beschrieben, der eine Staudrucksonde zum Erfassen eines charakteristischen Strömungswinkels zwischen den Lüfterschaufeln angeordnet aufweist.

Die US 2002/0170291 A1 offenbart eine Regelungseinrichtung für einen Abgasturbolader einer Verbrennungskraftmaschine, bei welcher stromauf eines Verdichters des Abgasturboladers ein Luftmassenmesser angeordnet ist, um eine angesaugte Luftmasse zu erfassen. Zudem ist ein Drucksensor vorgesehen, mittels welchem ein atmosphärischer Druck gemessen wird.

Aus der DE 102 37 416 A1 ist ein Verdichter eines Abgasturboladers bekannt, bei welchem stromauf des Verdichters ein Luftströmungssensor vorgesehen ist, mittels welchem ein Luftmassenstrom messbar ist. Zudem wird ein Saugdruck stromauf des Verdichters gemessen.

In der DE 100 54 843 A1 ist ein Verfahren zur Begrenzung eines Ladedrucks einer mittels eines Abgasturboladers aufgeladenen Brennkraftmaschine beschrieben, bei welcher ein Druck einer angesaugten Luft stromauf des Verdichters gemessen wird.

Aus der DE 39 23 753 A1 ist ein Verfahren zur Messung einer Relativgeschwindigkeit eines anströmenden Mediums bekannt, welches insbesondere in der Luftfahrttechnik zur Messung einer Geschwindigkeit von Luftfahrzeugen eingesetzt wird. Dabei wird mittels eines Prandtl'schen Staurohrs ein Totaldruck und ein statischer Druck eines Mediums gemessen und aus der Differenz der Druckwerte ein geschwindigkeitsabhängiger Staudruck ermittelt.

Es ist eine Aufgabe der Erfindung, einen Abgasturbolader für eine Brennkraftmaschine, insbesondere eine Brennkraftmaschine eines Nutzfahrzeugs, vorzusehen, der die einfache und zuverlässige Erfassung der von der Brennkraftmaschine angesaugten Luftmasse ermöglicht, welche Messgröße zum Beispiel zur Abgasrückführregelung benutzt werden kann. Es ist eine weitere Aufgabe der Erfindung, ein Verfahren zum Bestimmen der von einer Brennkraftmaschine angesaugten Luftmasse vorzuschlagen.

Diese Aufgaben werden durch einen Abgasturbolader für eine Brennkraftmaschine mit den Merkmalen des Anspruchs 1 bzw. ein Verfahren mit den Merkmalen des Anspruchs 6 gelöst. Vorteilhafte Ausgestaltungen und Weiterbildungen der Erfindung sind Gegenstand der jeweiligen abhängigen Ansprüche.

Gemäß der Erfindung weist ein Abgasturbolader für eine Brennkraftmaschine eine Abgasturbine in einem Abgasstrang der Brennkraftmaschine und einen Verdichter in einem Ansaugtrakt der Brennkraftmaschine auf, wobei stromauf eines Verdichterrades des Verdichters in seinem Strömungskanal eine Staudrucksonde vorgesehen ist, die zum Erfassen wenigstens des Totaldrucks im Strömungskanal des Verdichters ausgebildet ist.

Mit Hilfe des durch die Staudrucksonde erfassten Totaldrucks im Strömungskanal des Verdichters des Abgasturboladers lässt sich auf einfache Weise die vom Verdichter und damit auch von der Brennkraftmaschine angesaugte Luftmasse bestimmen. Bei der Staudrucksonde handelt es sich um ein staub- und ölunempfindliches Messsystem mit einer langen Lebensdauer und einer äußerst geringen Sensordrift, sodass der oben beschriebene Abgasturbolader der Erfindung in vorteilhafter Weise auch für Nutzfahrzeuge verwendet werden kann und eine einfache und zuverlässige Erfassung der von der Brennkraftmaschine angesaugten Luftmasse ermöglicht.

In einer Ausführungsform der Erfindung ist die Staudrucksonde unmittelbar im Gehäuse des Verdichters angeordnet, sodass eine sehr kompakte Bauform des Abgasturboladers einschließlich des Luftmassensensors erzielt wird.

In einer alternativen Ausführungsform der Erfindung ist die Staudrucksonde in einem Strömungskanal-Formteil unmittelbar stromauf des Verdichtergehäuses angeordnet, falls zum Beispiel aus Schnittstellenproblemen zwischen dem Ansaugsystem und dem Verdichtereintritt zwischen den Schlauchstutzen des Ansaugsystems und den Verdichter ein Formteil gesetzt werden mass.

In einer Ausgestaltung der Erfindung ist die Staudrucksonde zum Erfassen des Totaldrucks und des statischen Drucks im Strömungskanal des Verdichters ausgebildet, und eine Steuereinheit bestimmt aus dem erfassten Totaldruck und dem erfassten statischen Druck den Differenzdruck im Strömungskanal des Verdichters und daraus die vom Verdichter bzw. der Brennkraftmaschine angesaugte Luftmasse.

In einer alternativen Ausgestaltung der Erfindung ist die Staudrucksonde zum Erfassen des Totaldrucks im Strömungskanal des Verdichters ausgebildet; ferner ist eine Messbohrung an einer Wandung des Strömungskanals des Verdichters zum Erfassen des statischen Drucks im Strömungskanal des Verdichters vorgesehen; und eine Steuereinheit bestimmt aus dem erfassten Totaldruck und dem erfassten statischen Druck den Differenzdruck im Strömungskanal des Verdichters und daraus die vom Verdichter bzw. der Brennkraftmaschine angesaugte Luftmasse.

Gemäß einem weiteren Aspekt der Erfindung umfasst ein Verfahren zum Bestimmen einer Luftmasse, die von einer Brennkraftmaschine angesaugt wird, der ein Abgasturbolader mit einem Verdichter zugeordnet ist, die Schritte des Erfassens eines Totaldrucks und eines statischen Drucks in einem Strömungskanal des Verdichters; des Bestimmens eines Differenzdrucks im Strömungskanal des Verdichters aus dem erfassten Totaldruck und dem erfassten statischen Druck; und des Bestimmens der von der Brennkraftmaschine angesaugten Luftmasse aus dem bestimmten Differenzdruck, wobei wenigstens der Totaldruck im Strömungskanal des Verdichters durch eine Staudrucksonde stromauf eines Verdichterrades des Verdichters in seinem Strömungskanal erfasst wird.

Mit diesem Verfahren können die gleichen Effekte und Vorteile erzielt werden, wie sie oben in Zusammenhang mit dem erfindungsgemäßen Abgasturbolader erläutert worden sind. Insbesondere ist dieses Verfahren in vorteilhafter Weise für Brennkraftmaschinen von Nutzfahrzeugen einsetzbar.

In einer Ausgestaltung der Erfindung werden dabei sowohl der Totaldruck als auch der statische Druck im Strömungskanal des Verdichters durch die Staudrucksonde erfasst.

In einer alternativen Ausgestaltung der Erfindung wird der Totaldruck im Strömungskanal des Verdichters durch die Staudrucksonde erfasst, während der statische Druck im Strömungskanal des Verdichters durch eine Messbohrung an einer Wandung des Strömungskanals des Verdichters erfasst wird.

Obige sowie weitere Merkmale und Vorteile der Erfindung werden aus der nachfolgenden Beschreibung von bevorzugten, nicht-einschränkenden Ausführungsbeispielen der Erfindung unter Bezugnahme auf die beiliegenden Zeichnungen besser verständlich. Darin zeigen:
- Fig.: 1 eine schematische Darstellung einer Brennkraftmaschine mit einem zugeordneten Abgasturbolader;
- Fig. 2: eine Teilschnittansicht durch einen Verdichter des Abgasturboladers von Fig. 1 gemäß einem ersten Ausführungsbeispiel der Erfindung;
- Fig. 3: eine Draufsicht des Verdichters von Fig. 2 gemäß Ansicht A von Fig. 2; und
- Fig. 4: eine Seitenansicht eines Strömungskanal-Formteils, das unmittelbar stromauf des Verdichters des Abgasturboladers von Fig. 1 eingesetzt ist, gemäß einem zweiten Ausführungsbeispiel der Erfindung.

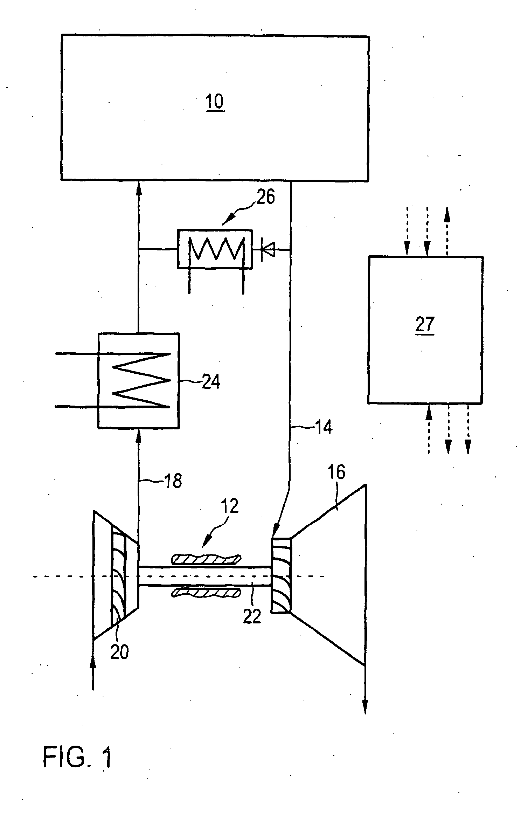

In Fig. 1 ist schematisch eine Brennkraftmaschine 10 dargestellt, die insbesondere für ein Nutzfahrzeug anwendbar ist. Die Brennkraftmaschine 10 ist mit einem Abgasturbolader 12 ausgestattet, der in einem Abgasstrang 14 der Brennkraftmaschine 10 eine Abgasturbine 16 und in einem Ansaugtrakt 18 einen Verdichter 20 umfasst, dessen Verdichterrad von dem Turbinenrad über eine Welle 22 angetrieben wird. Im Betrieb der Brennkraftmaschine 10 wird das Turbinenrad der Abgasturbine 16 von den Abgasen im Abgasstrang in Drehung versetzt, sodass im Verdichter 20 Verbrennungsluft aus der Umgebung angesaugt und auf einen erhöhten Druck komprimiert wird.

Stromab des Verdichters 20 ist im Ansaugtrakt 18 ein Ladeluftkühler 24 angeordnet, in dem die verdichtete Ladeluft aus dem Verdichter 20 gekühlt wird, bevor sie den Zylindereinlässen der Brennkraftmaschine 10 zugeführt wird.

Der Brennkraftmaschine 10 ist ferner eine Abgasrückführeinrichtung 26 zugeordnet, über die Abgas aus dem Abgasstrang 14 stromauf der Abgasturbine 16 in den Ansaugtrakt 18 stromab des Ladeluftkühlers 24 zurückgeführt werden kann. Die Abgasrückführeinrichtung 26 enthält eine Rückführleitung, ein in der Rückführleitung vorgesehenes Ventil und einen Abgaskühler.

Ferner ist für die Brennkraftmaschine 10 eine Steuereinheit 27 vorgesehen, welche in Abhängigkeit von verschiedenen Zustands- und Betriebsgrößen der Brennkraftmaschine 10 den Betrieb des Abgasturboladers 12, des Ladeluftkühlers 24, der Abgasrückführeinrichtung 26 und dergleichen steuert.

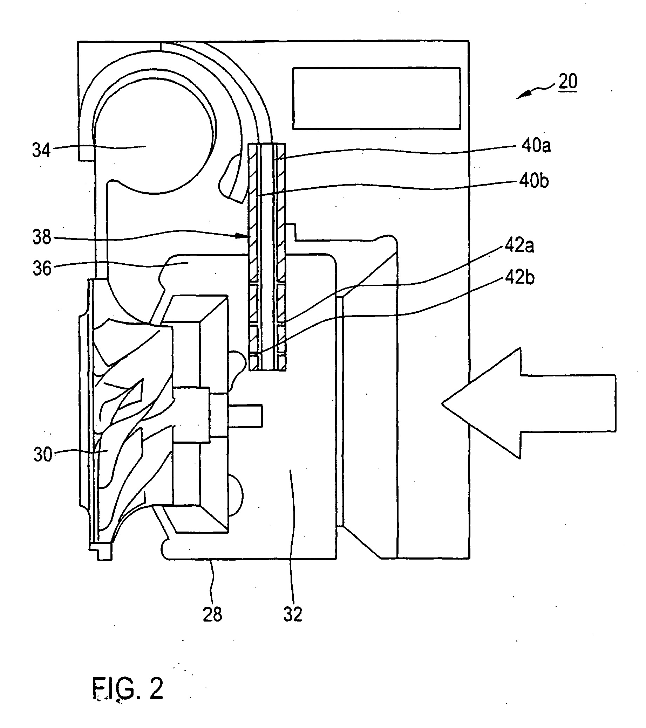

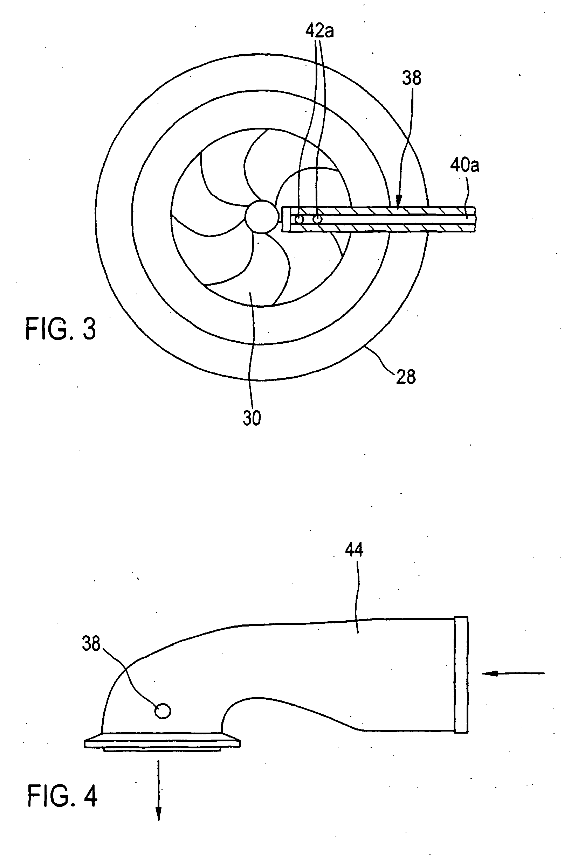

Anhand von Fig. 2 und 3 wird nun der Aufbau des Verdichters 20 des Abgasturboladers 12 der Brennkraftmaschine 10 gemäß einem ersten Ausführungsbeispiel der Erfindung näher erläutert.

Der Verdichter 20 enthält ein in einem Gehäuse 28 angeordnetes Verdichterrad 30, das Luft über einen Strömungskanal 32 ansaugt, wie durch, den Pfeil in Fig. 2 angedeutet, und über einen Spiralkanal 34 in den Ansaugtrakt 18 der Brennkraftmaschine 10 ausgibt. Außerdem sind in an sich bekannter Weise ein Luftsammelraum 36 parallel zum Strömungskanal 32 zum radialen Zuführen von Verbrennungsluft in den Strömungskanal 32 des Verdichtergehäuses 28 sowie ein oder mehrere Leitgitter zum Einstellen der Strömungsverhältnisse im Verdichter vorgesehen. Da der Aufbau und die Funktionsweise eines solchen Verdichters 20 bereits hinlänglich bekannt sind und die vorliegende Erfindung außerdem nicht auf einen speziellen Verdichter beschränkt ist, wird hier auf eine detailliertere Erläuterung des Verdichters 20 verzichtet.

Stromauf des Verdichterrades 30 ist in den Verdichter 20 ferner eine Staudrucksonde 38 integriert, die in radialer Richtung bis nahe an die Wellenachse des Verdichterrades 30 in das Verdichtergehäuse 28 hineinragt.

Der Aufbau und die Funktionsweise von Staudrucksonden sind dem Fachmann bekannt, weshalb auf eine ausführliche Erläuterung diesbezüglich verzichtet wird. Es wird in diesem Zusammenhang lediglich beispielhaft auf die beiden Patentdokumente DE 195 09 208 A und DE 196 23 586 A verwiesen.

In dem in Fig. 2 dargestellten Ausführungsbeispiel weist die Staudrucksonde 38 einen ersten Wirkdruckkanal 40a, der dem Luftstrom im Strömungskanal 32 zugewandt ist, und einen zweiten Wirkdruckkanal 40b, der dem Luftstrom im Strömungskanal 32 abgewandt ist, auf. Der erste Wirkdruckkanal 40a ist über wenigstens eine erste Wirkdruckbohrung 42a dem Luftstrom im Strömungskanal 32 zugewandt geöffnet, sodass der Totaldruck (d.h. statischer Druck + dynamischer Druck) des Luftstroms im Strömungskanal 32 auf den ersten Wirkdruckkanal 40a wirkt und auf diese Weise der Totaldruck des Luftstroms gemessen werden kann. In ähnlicher Weise ist der zweite Wirkdruckkanal 40b über wenigstens eine zweite Wirkdruckbohrung 42b dem Luftstrom im Strömungskanal 32 wenigstens teilweise abgewandt geöffnet, sodass der nur der statische Druck des Luftstroms im Strömungskanal 32 auf den zweiten Wirkdruckkanal 40b wirkt und auf diese Weise der statische Druck des Luftstroms erfasst werden kann. Die ersten und die zweiten Wirkdruckbohrungen 42a, 42b sind vorzugsweise jeweils gleichmäßig über den Strömungsquerschnitt des Strömungskanals 32 verteilt.

Der über den ersten Wirkdruckkanal 40a gemessene Totaldruck und der über den zweiten Wirkdruckkanal 40b gemessene statische Druck des Luftstroms im Strömungskanal 32 werden von der Staudrucksonde 38 der Steuereinheit 27 zugeführt, die daraus einen Differenzdruck bestimmt, der proportional zur Strömungsgeschwindigkeit im Strömungskanal 32 ist und daher

(z.B. über die Luftdichte) ein Maß für die von dem Verdichter 20 des Abgasturboladers 12 und damit von der Brennkraftmaschine 10 angesaugte Luftmasse ist.

Die hier verwendete Staudrucksonde 38 hat gegenüber den herkömmlichen Heißfilm-Luftmassenmessern bei gleicher Messgenauigkeit eine viel höhere Lebensdauer. Der Abgasturbolader 12 mit integrierter Staudrucksonde 38 stellt damit ein einfaches, kostengünstiges und zuverlässiges Messsystem für die von der Brennkraftmaschine 10 angesaugte Luftmasse bereit und kann in vorteilhafter Weise insbesondere auch bei Nutzfahrzeugen eingesetzt werden.

In einer Modifikation des ersten Ausführungsbeispiels der Fig. 2 und 3 weist die Staudrucksonde 38 nur den ersten Wirkdruckkanal 40a mit den ersten Wirkdruckbohrungen 42a zur Erfassung des Totaldrucks im Strömungskanal 32 auf. Zur Erfassung des statischen Drucks im Strömungskanal 32 ist statt des zweiten Wirkdruckkanals 40b der Staudrucksonde 38 eine Messbohrung (nicht dargestellt) an einer Verdichtergehäusewandung des Strömungskanals 32 vorgesehen, deren Messöffnung zum Beispiel etwa parallel zur Luftströmungsrichtung verläuft.

Auch in diesem Fall kann die Steuereinheit 27 aus dem von der Staudrucksonde 38 erfassten Totaldruck im Strömungskanal 32 und dem von der Messbohrung erfassten statischen Druck im Strömungskanal 32 einen Differenzdruck und daraus schließlich eine von der Brennkraftmaschine 10 angesaugte Luftmasse bestimmen.

Bezug nehmend auf Fig. 4 wird nun ein zweites Ausführungsbeispiel näher beschrieben.

Aus Schnittstellenproblemen zwischen dem Ansaugsystem und dem Verdichtereintritt ist es in der Praxis nicht immer möglich, einen Schlauchstutzen direkt auf den Verdichter 20 aufzuschieben. Aus diesem Grund wird ein Strömungskanal-Formteil 44 zum Beispiel aus Aluminium direkt mit einer V-Band-Schelle, einer normalen Verschraubung oder dergleichen vor den Verdichter 20 gesetzt, an welches Formteil 44 schließlich ein Schlauchstutzen des Ansaugsystems angesetzt werden kann.

In dieses Strömungskanal-Formteil 44 wird ähnlich dem oben beschriebenen ersten Ausführungsbeispiel eine Staudrucksonde 38 integriert. Der Aufbau, die Anordnung und die Funktionsweise der Staudrucksonde 38 sind analog den obigen Erläuterungen, die Staudrucksonde 38 dient insbesondere der Erfassung des Totaldrucks und des statischen Drucks des Luftstroms im Strömungskanal-Formteil 44. Die Staudrucksonde 38 wird dabei möglichst nahe dem Verdichter 20 in das Formteil 44. eingebaut, wie in Fig. 4 angedeutet.

Auch im Fall des zweiten Ausführungsbeispiels ist eine Modifikation analog dem ersten Ausführungsbeispiel möglich. Das heißt, die Staudrucksonde 38 dient nur der Erfassung des Totaldrucks, und der statische Druck im Strömungskanal-Formteil 44 wird mittels einer Messbohrung gemessen.

## Patentansprüche

1. Abgasturbolader für eine Brennkraftmaschine (10), mit einer Abgasturbine (16) in einem Abgasstrang (14) der Brennkraftmaschine (10); und
einem Verdichter (20) in einem Ansaugtrakt (18) der Brennkraftmaschine (10),
**dadurch gekennzeichnet, dass**
stromauf eines Verdichterrades (30) des Verdichters (20) in seinem Strömungskanal (32) eine Staudrucksonde (38) vorgesehen ist, die zum Erfassen wenigstens des Totaldrucks im Strömungskanal des Verdichters ausgebildet ist.

2. Abgasturbolader nach Anspruch 1,
**dadurch gekennzeichnet, dass**
die Staudrucksonde (38) in einem Gehäuse (28) des Verdichters (20) angeordnet ist.

3. Abgasturbolader nach Anspruch 1,
**dadurch gekennzeichnet, dass**
die Staudrucksonde (38) in einem Strömungskanal-Formteil (44) unmittelbar stromauf eines Gehäuses des Verdichters (20) angeordnet ist.

4. Abgasturbolader nach einem der Ansprüche 1 bis 3,
**dadurch gekennzeichnet, dass**
die Staudrucksonde (38) zum Erfassen des Totaldrucks und des statischen Drucks im Strömungskanal (32) des Verdichters (20) ausgebildet ist; und
dass eine Steuereinheit (27) aus dem erfassten Totaldruck und dem erfassten statischen Druck den Differenzdruck im Strömungskanal des Verdichters und daraus die von der Brennkraftmaschine (10) angesaugte Luftmasse bestimmt.

5. Abgasturbolader nach einem der Ansprüche 1 bis 3,
**dadurch gekennzeichnet, dass**
die Staudrucksonde (38) zum Erfassen des Totaldrucks im Strömungskanal des Verdichters (20) ausgebildet ist; dass ferner eine Messbohrung an einer Wandung des Strömungskanals des Verdichters zum Erfassen des statischen Drucks im Strömungskanal des Verdichters vorgesehen ist; und
dass eine Steuereinheit (27) aus dem erfassten Totaldruck und dem erfassten statischen Druck den Differenzdruck im Strömungskanal des Verdichters und daraus die von der Brennkraftmaschine (10) angesaugte Luftmasse bestimmt.

6. Verfahren zum Bestimmen einer Luftmasse, die von einer Brennkraftmaschine angesaugt wird, der ein Abgasturbolader (12) mit einem Verdichter (20) zugeordnet ist, mit den Schritten:
Erfassen eines Totaldrucks und eines statischen Drucks in einem Strömungskanal des Verdichters (20);
Bestimmen eines Differenzdrucks im Strömungskanal des Verdichters aus dem erfassten Totaldruck und dem erfassten statischen Druck; und
Bestimmen der von der Brennkraftmaschine (10) angesaugten Luftmasse aus dem bestimmten Differenzdruck,
wobei wenigstens der Totaldruck im Strömungskanal des Verdichters durch eine Staudrucksonde (38) stromauf eines Verdichterrades (30) des Verdichters (20) in seinem Strömungskanal (32) erfasst wird.

7. Verfahren nach Anspruch 6,
**dadurch gekenntzeichnet, dass**
der Totaldruck und der statische Druck im Strömungskanal des Verdichters durch die Staudrucksonde (38) erfasst werden.

8. Verfahren nach Anspruch 6,
**dadurch gekennzeichnet, dass**
der Totaldruck im Strömungskanal des Verdichters durch die Staudrucksonde (38) erfasst wird; und
dass der statische Druck im Strömungskanal des Verdichters durch eine Messbohrung an einer Wandung des Strömungskanals des Verdichters erfasst wird.

## Claims

1. Turbocharger for an internal combustion engine (10), comprising an exhaust gas turbine (16) in an exhaust train (14) of the internal combustion engine (10); and
a compressor (20) in an intake train (18) of the internal combustion engine (10),
**characterised in that**
upstream of a compressor impeller (30) of the compressor (20), there is provided in its flow passage (32) a backpressure probe (38) designed for detecting at least the total pressure in the flow passage of the compressor.

2. Turbocharger according to claim 1,
**characterised in that**
the backpressure probe (38) is accommodated in a housing (28) of the compressor (20).

3. Turbocharger according to claim 1,
**characterised in that**
the backpressure probe (38) is accommodated in a flow passage moulding (44) immediately upstream of a housing of the compressor (20).

4. Turbocharger according to any of claims 1 to 3,
**characterised in that**
the backpressure probe (38) is designed for detecting the total pressure and the static pressure in the flow passage (32) of the compressor (20); and **in that**
a control unit (27) determines from the detected total pressure and from the detected static pressure the pressure differential in the flow passage of the compressor and therefrom the air mass drawn in by the internal combustion engine (10).

5. Turbocharger according to any of claims 1 to 3,
**characterised in that**
the backpressure probe (38) is designed for detecting the total pressure in the flow passage of the compressor (20); **in that** further a measuring bore is provided at a wall of the flow passage of the compressor for detecting the static pressure in the flow passage of the compressor; and **in that**
a control unit (27) determines from the detected total pressure and from the detected static pressure the pressure differential in the flow passage of the compressor and therefrom the air mass drawn in by the internal combustion engine (10).

6. Method for the determination of an air mass drawn in by an internal combustion engine to which is assigned a turbocharger (12) with a compressor (20), the method comprising the steps of:
detecting a total pressure and a static pressure in a flow passage of the compressor (20);
determining a differential pressure in the flow passage of the compressor from the detected total pressure and from the detected static pressure; and
determining the air mass drawn in by the internal combustion engine (10) from the determined differential pressure,
wherein at least the total pressure in the flow passage of the compressor is detected by a backpressure probe (38) located upstream of the compressor impeller (30) of the compressor (20) in the flow passage (32) thereof.

7. Method according to claim 6,
**characterised in that**
the total pressure and the static pressure in the flow passage of the compressor are detected by the backpressure probe (38).

8. Method according to claim 6,
**characterised in that**
the total pressure in the flow passage of the compressor is detected by the backpressure probe (38); and **in that**
the static pressure in the flow passage of the compressor is detected by a measuring bore at a wall of the flow passage of the compressor.

## Revendications

1. Turbosoufflante à gaz d'échappement pour un moteur à combustion interne (10) qui présente une turbine à gaz d'échappement (16) dans un système de gaz d'échappement (14) du moteur à combustion interne (10) et un compresseur (20) dans une voie d'aspiration (18) du moteur à combustion interne (10), **caractérisée en ce qu'**il est prévu en amont d'une roue de compresseur (30) du compresseur (20), dans son canal d'écoulement (32), une sonde à pression dynamique (38) qui sert à détecter au moins la pression totale dans la canal d'écoulement du compresseur.

2. Turbosoufflante à gaz d'échappement selon la revendication 1, **caractérisée en ce que** la sonde à pression dynamique (38) est placée dans un carter (38) du compresseur (20).

3. Turbosoufflante à gaz d'échappement selon la revendication 1, **caractérisée en ce que** la sonde à pression dynamique (38) est disposée dans une pièce moulée (44) du canal d'écoulement directement en aval d'un carter du compresseur (20).

4. Turbosoufflante selon l'une quelconque des revendications 1 à 3, **caractérisée en ce que** la sonde à pression dynamique (38) est conçue pour détecter la pression totale et la pression statique dans le canal d'écoulement (32) du compresseur (20) et **en ce qu'**une unité de commande (27) détermine à partir de la pression totale détectée et de la pression statique détectée la pression différentielle dans le canal d'écoulement du compresseur et la quantité d'air aspirée par le moteur à combustion interne (10).

5. Turbosoufflante selon l'une quelconque des revendications précédentes 1 à 3, **caractérisée en ce que** la sonde à pression dynamique (38) est conçue pour détecter la pression totale dans le canal d'écoulement du compresseur (20) ; **en ce qu'**il est prévu en outre un alésage de mesure sur une paroi du canal d'écoulement du compresseur servant à détecter la pression statique dans le canal d'écoulement du compresseur, et **en ce qu'**une unité de commande (27) détermine à partir de la pression totale détectée et de la pression statique détectée la pression différentielle dans le canal d'écoulement du compresseur et la quantité d'air aspiré par le moteur à combustion interne (10).

6. Procédé pour déterminer une quantité d'air qui est aspirée par un moteur à combustion interne auquel est associé une turbosoufflante (12) à gaz d'échappement avec un compresseur, qui comprend les étapes suivantes :
détecter une pression totale et d'une pression statique dans un canal d'écoulement du compresseur (20) ;
déterminer une pression différentielle dans le canal d'écoulement du compresseur à partir de la pression totale détectée et de la pression statique détectée ; et
déterminer la quantité d'air aspirée par le moteur à combustion interne (10) à partir de la pression différentielle déterminée ;
au moins la pression totale dans le canal d'écoulement du compresseur étant détectée par une sonde à pression dynamique (38) en amont d'une roue (30) de compresseur du compresseur (20) dans son canal d'écoulement.

7. Procédé selon la revendication 6, **caractérisé en ce que** la pression totale et la pression statique sont détectées dans le canal d'écoulement du compresseur par la sonde à pression dynamique (38).

8. Procédé selon la revendication 6, **caractérisé en ce que** la pression totale dans le canal d'écoulement du compresseur est détectée par la sonde à pression dynamique (38) ; et **en ce que** la pression statique dans le canal d'écoulement du compresseur est détectée par un alésage de mesure placé sur une paroi du canal d'écoulement du compresseur.
